# DEMANDE DE BREVET EUROPEEN

(11) **EP 2 020 645 A2**
(43) Date de publication de la demande: **04.02.2009**
(21) Numéro de dépôt: 08103682.4
(22) Date de dépôt: 23.04.2008
(51) Int. Cl.: G07C 9/00, G10L 17/00

(54) **Procédé et système de contrôle d'accès par un opérateur à un code notamment d'une serrure à code.**

(30) Priorité: 31.07.2007 FR 0756848
(71) Demandeur: BRINK'S FRANCE, 75009 Paris (FR)
(72) Inventeur: Lequimme, Philippe, 77500 Chelles (FR)
(74) Mandataire: Jacobson, Claude

(57) **Abrégé**

Ce procédé est caractérisé en ce qu'il consiste à établir (en 10, 12) une liaison vocale entre l'opérateur et un serveur de code accessible par l'opérateur pour obtenir le code d'ouverture de la serrure pour permettre au serveur de :
- dicter (12) à l'opérateur des mots ou des phrases à répéter ;
- enregistrer (12) les mots ou phrases prononcés en réponse par l'opérateur ;
- analyser (15) ces réponses pour détecter (16, 17) la présence ou l'absence d'informations caractéristiques d'une tension vocale de l'opérateur liée à une agression, pour:
• en cas d'absence de ces informations délivrer (en 18) le code d'accès à l'opérateur, ou,
• en cas de présence de ces informations, relancer des opérations de dictée, d'enregistrement et d'analyse, pour confirmer ou non la présence de ces informations afin :
o en cas de non confirmation de délivrer (en 18) le code à l'opérateur ,ou,
o en cas de confirmation, déclencher une alerte et inhiber la délivrance du code à l'opérateur.

## Description

La présente invention concerne un procédé de contrôle d'accès par un opérateur à un code notamment de serrure à code et à un système pour la mise en oeuvre de ce procédé.

De telles serrures à codes trouvent de nombreuses applications, notamment en matière de contrôle d'accès.

Ainsi par exemple, de telles serrures peuvent être associées à des portes de locaux sécurisés ou encore à des trappes d'accès à différents moyens tels que par exemple des distributeurs automatiques de billets ou autres automates bancaires.

Les opérateurs ou utilisateurs de ce type de serrures disposent alors du code qu'il leur suffit de composer pour accéder à l'endroit ou à la zone souhaitée.

On constate cependant que ceci présente un certain nombre d'inconvénients, notamment dans les applications où une sécurité et une fiabilité d'accès maximales doivent être assurées comme par exemple les accès aux locaux dans lesquels des distributeurs automatiques de billets sont implantés ou encore à ces distributeurs automatiques eux-mêmes.

Le but de l'invention est donc de résoudre ces problèmes.

A cet effet, l'invention a pour objet un procédé de contrôle d'accès par un opérateur à un code notamment d'une serrure à code, caractérisé en ce qu'il consiste à établir une liaison vocale entre l'opérateur et un serveur de code accessible par l'opérateur pour obtenir le code d'ouverture de la serrure pour permettre au serveur de :
- dicter à l'opérateur des mots ou des phrases à répéter ;
- enregistrer les mots ou phrases prononcés en réponse par l'opérateur ;
- analyser ces réponses de l'opérateur pour détecter la présence ou l'absence d'informations caractéristiques d'une tension vocale de l'opérateur liée à une agression, pour :
   - en cas d'absence de ces informations délivrer le code d'accès à l'opérateur, ou,
   - en cas de présence de ces informations, relancer des opérations de dictée, d'enregistrement et d'analyse, pour confirmer ou non la présence de ces informations afin :
      o en cas de non confirmation de délivrer le code à l'opérateur, ou,
      o en cas de confirmation, déclencher une alerte et inhiber la délivrance du code à l'opérateur.

Suivant un mode particulier de réalisation, l'invention peut comporter la caractéristique suivante :
- l'étape d'analyse consiste à analyser le spectrogramme des réponses de l'opérateur et l'énergie du signal correspondant en fonction de la fréquence pour détecter les informations caractéristiques de tension liées à une agression de l'opérateur.

L'invention concerne également un système de contrôle d'accès par un opérateur à un code notamment d'une serrure à code, caractérisé en ce qu'il comporte en outre un serveur de code accessible par l'opérateur pour obtenir le code d'ouverture de la serrure et comportant des moyens d'échange d'informations vocales avec l'opérateur pour mettre en oeuvre un procédé selon l'une quelconque des revendications précédentes.

Suivant un mode particulier de réalisation, l'invention peut comporter la caractéristique suivante :
- les moyens d'échange d'informations vocales entre l'opérateur et le serveur comportent un réseau de télécommunication sans fil, l'opérateur étant doté d'un téléphone portable.

L'invention sera mieux comprise à la lecture de la description qui va suivre, donnée uniquement à titre d'exemple et faite en se référant aux dessins annexés sur lesquels :
- la figure 1 représente un schéma synoptique illustrant la structure d'un système selon l'invention ; et
- la figure 2 représente un organigramme illustrant un procédé de contrôle d'accès selon l'invention.

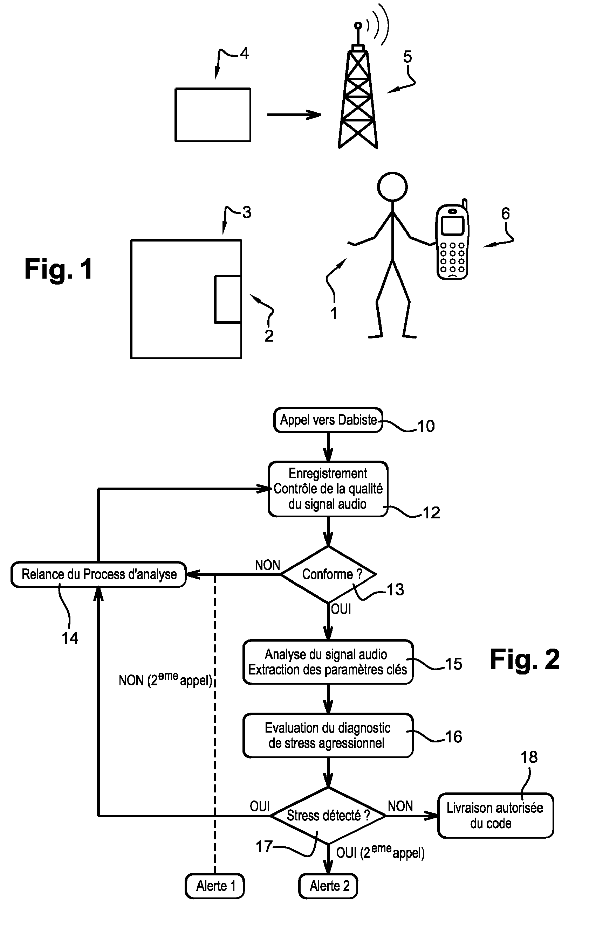

Le procédé et le système de contrôle d'accès selon l'invention permettent comme on peut le voir sur la figure 1, à un opérateur 1 d'obtenir un code notamment d'une serrure à code 2 lui permettant de déverrouiller celle-ci et donc d'accéder au local, à la zone ou encore à l'appareil souhaité 3.

A cet effet, le système selon l'invention comporte en outre un serveur de codes 4 accessible par l'opérateur 1 pour obtenir le code d'ouverture de la porte et qui comporte un certain nombre de moyens de contrôle qui seront décrits plus en détail par la suite.

En fait, le serveur de code 4 et l'opérateur 1 sont équipés de moyens 5 et 6 permettant d'établir entre eux, un échange d'informations vocales pour mettre en oeuvre un certain nombre d'étapes de contrôle avant de délivrer le code à l'opérateur.

Ainsi par exemple, ces moyens d'échange d'informations vocales peuvent comporter des moyens de télécommunication sans fil, tels que par exemple des moyens téléphoniques, l'opérateur disposant par exemple d'un téléphone portable 6 ou autre permettant d'accéder au serveur 4 à travers un réseau téléphonique approprié 5.

Comme cela est illustré sur la figure 2, lorsque l'opérateur enclenche une procédure d'obtention de code d'une serrure quelconque, le serveur déclenche par exemple en 10 une opération d'appel de l'opérateur.

Le serveur de code dicte alors un certain nombre de mots ou de phrases à répéter par l'opérateur. L'opérateur est alors amené à répéter ces mots ou ces phrases dictées et le serveur de code enregistre ces mots ou phrases prononcés en réponse par l'opérateur. Ces différentes étapes sont désignées par la référence générale 12 sur la figure.

En 13, un test est déclenché pour déterminer si les phrases prononcées en réponse par l'opérateur présentent une qualité suffisante. Si cela n'est pas le cas, on relance en 14, le processus d'acquisition tel que décrit précédemment. Si lors de la seconde tentative d'acquisition la qualité n'est toujours pas bonne, le serveur déclenche une alerte de niveau 1.

Par contre, si les enregistrements effectués lors de l'étape 12 sont jugés conformes en 13 à ce qui est attendu, le serveur de code déclenche en 15 une opération d'analyse des réponses dictées par l'opérateur pour détecter la présence ou l'absence d'informations caractéristiques d'une tension vocale de l'opérateur liée à une agression. A cet effet, le signal audio est analysé pour en extraire des paramètres ou informations caractéristiques comme par exemple par analyse du spectrogramme vocal et de l'énergie de certaines portions de ce signal en fonction de la fréquence.

Cette étape d'analyse est déjà bien connue dans l'état de la technique de sorte qu'elle ne sera pas décrite plus en détail par la suite.

Il est en effet bien connu dans l'état de la technique qu'une tension liée à une agression d'une personne peut être détectée par analyse de sa voix. Ainsi, il est possible en 16 d'évaluer l'état de tension de l'opérateur lié à une telle agression.

Si en 17 aucune tension de ce type n'est détectée, c'est-à-dire en cas d'absence des informations caractéristiques décrites précédemment, le serveur de code est autorisé à délivrer le code à l'opérateur en 18. Par contre, si une tension de ce type est détectée en 17, c'est-à-dire si les informations caractéristiques ont été détectées dans la voix de l'opérateur, le serveur de code relance les opérations décrites précédemment, de dictée, d'enregistrement et d'analyse pour confirmer ou non la présence de ces informations.

Lors de ce contrôle, si la présence des informations caractéristiques de tension n'est pas confirmée, alors le serveur de code délivre le code à l'opérateur en 18, tandis que si celle-ci est confirmée, c'est-à-dire si lors du deuxième appel les informations caractéristiques de tension sont également détectées, alors le serveur de code déclenche une alerte de niveau 2 et inhibe la délivrance du code à l'opérateur.

Cette alerte de niveau 2 peut par exemple être différente de l'alerte de niveau 1 consécutive à une relance du processus d'acquisition à la suite d'une non-conformité détectée lors de l'étape 13, en déclenchant par exemple des opérations d'assistance particulières de l'opérateur.

Il est à noter que les réponses des opérateurs peuvent être enregistrées à chaque analyse afin de constituer un historique de spectrogrammes de la voix de cet opérateur pour enrichir le système et de rendre de plus en plus fine l'analyse vocale des opérateurs. L'objectif recherché est d'atteindre effectivement un niveau zéro de défaut de fausse alerte et de 100% de détection d'une agression.

## Revendications

1. Procédé de contrôle d'accès par un opérateur à un code notamment d'une serrure à code, **caractérisé en ce qu'**il consiste à établir (en 10, 12) une liaison vocale entre l'opérateur (1) et un serveur de code (4) accessible par l'opérateur pour obtenir le code d'ouverture de la serrure (2) pour permettre au serveur de :
- dicter (12) à l'opérateur des mots ou des phrases à répéter ;
- enregistrer (12) les mots ou phrases prononcés en réponse par l'opérateur ;
- analyser (15) ces réponses de l'opérateur pour détecter (16, 17) la présence ou l'absence d'informations caractéristiques d'une tension vocale de l'opérateur liée à une agression, pour :
• en cas d'absence de ces informations délivrer (en 18) le code d'accès à l'opérateur, ou,
• en cas de présence de ces informations, relancer (en 14) des opérations de dictée, d'enregistrement et d'analyse, pour confirmer ou non la présence de ces informations afin :
o en cas de non confirmation de délivrer (en 18) le code à l'opérateur, ou,
o en cas de confirmation, déclencher une alerte et inhiber la délivrance du code à l'opérateur.

2. Procédé de contrôle d'accès par un opérateur selon la revendication 1, **caractérisé en ce que** l'étape d'analyse consiste à analyser le spectrogramme des réponses de l'opérateur et l'énergie du signal correspondant en fonction de la fréquence pour détecter les informations caractéristiques de tension liées à une agression de l'opérateur.

3. Système de contrôle d'accès par un opérateur (1) à un code notamment d'une serrure à code (2), **caractérisé en ce qu'**il comporte en outre un serveur de code (4) accessible par l'opérateur pour obtenir le code d'ouverture de la serrure et comportant des moyens (5, 6) d'échange d'informations vocales avec l'opérateur (1) pour mettre en oeuvre un procédé selon l'une quelconque des revendications précédentes.

4. Système de contrôle d'accès par un opérateur selon la revendication 3, **caractérisé en ce que** les moyens d'échange d'informations vocales entre l'opérateur (1) et le serveur (4) comportent un réseau de télécommunication sans fil (5), l'opérateur étant doté d'un téléphone portable (6).
